# EUROPEAN PATENT APPLICATION

(11) **EP 1 426 950 A2**
(43) Date of publication of application: **09.06.2004**
(21) Application number: 03025432.0
(22) Date of filing: 05.11.2003
(51) Int. Cl.: G11B 20/00

(54) **Recording and reproduction apparatus**

(30) Priority: 06.12.2002 JP 2002354999
(71) Applicant: Orion Electric Company, Ltd., Takefu-shi, Fukui-ken (JP)
(72) Inventor: Miyazaki, Hiroyuki, Takefu-shi Fukui-ken (JP)
(74) Representative: Kirschner, Klaus Dieter, Dipl.-Phys.

(57) **Abstract**

It is intended to solve a problem that unnecessary inoperable time is generated because time required for an initialization processing is not set according to an area used by a hard disk. When a power is turned on, interlock for nullifying a key operation is carried out. After initializing IC's and the like, the initialization of the hard disk is started. Whether the initialisation of the hard disk is finished is checked regularly. The initialization is finished according to the area used by the hard disk. If the end of this initialization is verified, the interlock is released and the key operation is enabled.

## Description

The present invention relates to a recording and reproduction apparatus using a randomly accessible recording medium such as a hard disk.

### Description of the Related Art

As recording and reproduction apparatuses using hard disks, there is known, for example, a recording and reproduction apparatus which records picture data in the hard disk. In this recording and reproduction apparatus, a control portion controls and drives control target devices such as a sub-control portion for IC's, a tuner, and a hard disk for recording and reproduction to record and reproduce picture data based on a content of an operation input from an operation portion.

When a power of the apparatus is turned on, the control portion consisting of a microcomputer initializes the control target devices and the hard disk and performs an initialization processing for allowing the entire apparatus to normally operate. In each of the IC's and the tuner, varied set values caused by abnormal termination, malfunction, or the like are reset to return the portion to an initial state. In the hard disk, disk scan is performed. Namely, in the hard disk, it is checked whether the picture data is consistent with management information for managing the picture data. If they are inconsistent, the hard disk automatically corrects the data or warns the apparatus that the data is damaged, so as to verify that the data is normally stored.

Procedures for the initialization processing will be described. When the recording and reproduction apparatus is' started, i.e., the power of the apparatus is turned on, the control portion initializes first the control target devices such as the IC's and the tuner connected to the control portion. The control portion then initializes the control target devices such as the IC's connected to the sub-control portion. The sub-control portion notifies the control portion of the end of the initialization of the IC's and the other portions. After the initialization of the IC's and the other portions is finished, the control portion commands the sub-control portion to execute the initialization of the hard disk. In response to the command, the sub-control portion initializes the hard disk.

During the initialization, the control portion nullifies an operation input from an operation portion by a key operation so as not to accept the input operation. The nullification of the input operation is referred to as "interlock". During this interlock, when predetermined time passes since the start of the initialization, the interlock is released to accept the input operation. The apparatus turns into an ordinary power-ON state, enabling the operation.

The predetermined time is fixed-length time that is preset based on the time required for the initialization processing. The time required to initialize the control target devices is preset and short. The time required to initialize the hard disk varies according to an area used by the hard disk at the time of starting the apparatus. Therefore, the time required for the initialization in a state in which all the areas are used is measured, maximum time for the initialization is obtained. The fixed-length predetermined time is determined from this maximum time and the time required for the initialization of the control target devices.

The control portion cannot recognise the area used by the hard disk at the time of starting the apparatus, so that the control portion cannot determine when the initialization processing is finished. Therefore, based on the preset, predetermined time, the control portion regards a point at which the predetermined time passes since the start of the initialization processing as the end of the initialization processing.

Meanwhile, the time actually required for the initialization of the hard disk varies according to the areas used by the hard disk. Due to this, the more the vacant areas are, the shorter the time required for the initialization of the hard disk becomes. Nevertheless, since the initialization processing time is set to have the fixed length, the control portion continues the initialization processing until the predetermined time passes although the actual initialization processing is finished. As a result, unnecessary time is consumed before a user's operation is accepted. If a capacity of the hard disk is, for example, 80 gigabytes, the time difference between the maximum time and the minimum time required for the initialization is about ten seconds. The user is unable to operate the apparatus for ten seconds.

To decrease such an inoperable state, Japanese Patent Application Laid-Open No. 2001-277603 (Paragraph 0053) discloses the following invention. When the initialization of a first area of a hard disk that stores contemporary data is finished, an operation for using only the first area is set acceptable whether or not the initialization of a second area that stores permanently stored data is finished.

As described above, when the initialization of a part of the area used by the hard disk is finished, the operation is partially permitted; however, the entire initialization is not finished yet. Due to this, the disadvantage that the user must wait until the apparatus is operable is not solved yet in the recording and reproduction apparatus that needs to perform a processing for instantly reproducing the data permanently stored in the hard disk.

Furthermore, in the recording and reproduction apparatus, a communication processing between, for example, each IC and the tuner becomes valid when the initialization of the IC is finished. At this time, a picture can be displayed on a screen of the apparatus based on an output of the tuner. However, the operation input from the operation portion is nullified. As a result, the user who operates the apparatus while viewing the screen feels embarrassed to know that nothing is changed despite the user's operation.

### SUMMARY OF THE INVENTION

The present invention has been achieved in light of these respects. It is an object of the present invention to provide a recording and reproduction apparatus capable of reducing time required to initialize a hard disk according to an area used by the hard disk and minimizing time required until the apparatus is operable.

According to an aspect of the present invention, there is provided a recording and reproduction apparatus comprising: a recording medium which records data; and a control portion which processes the data based on an operation input from an operation portion, wherein the control portion comprises: initialization means for executing initialization of the recording medium when the apparatus is started; monitoring means for monitoring a progress status of the initialization; lock means for nullifying the operation input from the operation portion during the initialization; and unlock means for accepting the operation when an end of the initialization is detected.

According to another aspect of the present invention, there is provided a recording and reproduction apparatus, wherein a sub-control portion drives and controls the recording medium comprises a control portion which controls the sub-control portion based on an operation input from an operation portion, and which processes the data, wherein the sub-control portion comprises: initialization means for executing initialization of the recording medium when the apparatus is started; and detection means for detecting a progress status of the initialization, and the control portion comprises: lock means for nullifying the operation input from the operation portion during the initialization; verification means for verifying with the sub-control portion the progress status of the initialization; and unlock means for accepting the operation when an end of the initialization is verified by a response from the sub-control portion.

According to the present, invention, the control portion can check the progress status of the initialization of the recording medium using the monitoring means or the check means. Due to this, if a utilization amount of the recording medium is small, it is unnecessary to wait for preset predetermined time, making it possible to finish the initialization at earlier time. Accordingly, it is possible to eliminate occurrence of unnecessary time for which an inoperable state continues although the initialization is actually finished.

Further, in the recording and reproduction apparatus in which the recording medium is driven and controlled by the sub-control portion and which includes the control portion which controls the sub-control portion based on the operation input from the operation portion to thereby process the data, the control portion comprises storage means for storing the operation input from the operation portion during the initialization, and executes an operation corresponding to the stored operation after starting accepting the operation. Therefore, even if an actual operation is not executed, a desired operation can be reserved, making it possible to effectively utilize latency time.

### BRIEF DESCRIPTION OF THE DRAWINGS

Fig. 1 is a schematic block diagram of a recording and reproduction apparatus in one embodiment according to the present invention; and
Fig. 2 is a flow chart for an initialization processing.

### DETAILED DESCRIPTION OF THE INVENTION

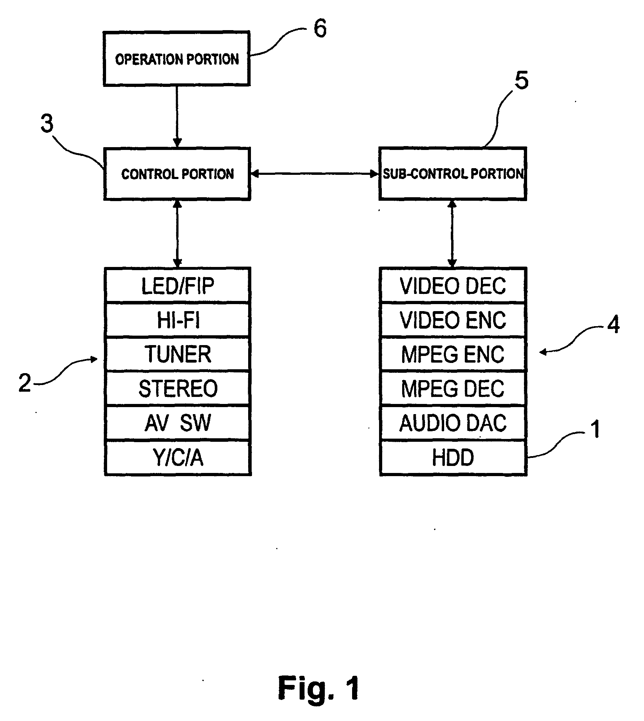

Fig. 1 illustrates a recording and reproduction apparatus in one embodiment according to the present invention. This recording and reproduction apparatus is a composite apparatus that uses a video recorder and a hard disk serving as a randomly accessible recording medium. The configuration of the recording and reproduction apparatus is well known. Namely, the recording and reproduction apparatus includes control target devices 2, such as a display IC., a Hi-Fi IC, a stereo IC, and a tuner, which are provided in the video recorder and which process picture data, a control portion 3 which drives and controls the control target devices 2, control target devices 4, such as an encoder and a decoder, which convert analog picture data to digital picture data, record the digital picture data on the hard disk 1, and which reproduce the data from the hard disk 1, a sub-control portion 5 which drives and controls the control target devices 4, and an operation portion 6 consisting of a remote controller or a main body operation panel. Each of the control portion 3 and the sub-control portion 5 consists of a microcomputer. The control portion 3 holds data communication with the sub-control portion 5, and controls the sub-control portion 5 based on a content of an operation input from the operation portion 6.

The control portion 3 performs an initialization processing for initializing the control target devices 2 and 4 and the hard disk 1 when the apparatus is started, i.e., a power of the apparatus is turned on or when the apparatus is reset. The initialization processing is the same as that already described above in relation to the conventional art. In this embodiment, differently from the conventional art, after the initialization of the control target devices 2 and 4 is finished, a progress status of the initialization of the hard disk 1 is monitored and interlock is released when it is detected that the initialization of the hard disk 1 is finished to thereby allow the operation from the operation portion 6.

Specifically, the control portion 3 includes lock means for nullifying the operation input from the operation portion 6 during the initialization, verification means for verifying with the sub-control portion 5 the progress status of the initialization, and unlock means for accepting the operation when the end of the initialization is verified by a response from the sub-control portion 5. The sub-control portion 5 includes initialization means for executing the initialization of the hard disk 1 according to a command from the control portion 3 when the apparatus is started, detection means for detecting the progress status of the initialization when the control portion 3 verifies with the sub-control portion whether the initialization of the hard disk 1 is finished, and notification means for transmitting a detection result to the control portion 3.

The verification means of the control portion 3 transmits an initialization end verification command to the sub-control portion 5 at certain time's intervals. If receiving the initialization end verification command from the control portion 3, the detection means of the sub-control portion 5 checks whether the initialization of the hard disk 1 is finished, The notification means of the sub-control portion 5 transmits a response command to the control portion 3 to notify the control portion 3 that the initialization is finished or not finished. The interval for transmitting the initialization end verification command can be arbitrarily set. If the interval is set shorter, a time lag until the end of the initialization is detected can be shortened and the interlock can be released at earlier time.

The control portion 3 also includes storage means for storing the operation input from the operation portion 6 during the initialisation processing and execution means for executing an operation corresponding to the stored operation after accepting the operation. The storage means stores an operation command input from an operation key during the initialization processing in a RAM of the control portion 3. For example, a picture received by the tuner is displayed on a screen of the apparatus when the initialization of the control target devices 2 and 4 is finished. Therefore, an operation such as channel switching or volume adjustment may be carried out and the operation command corresponding to one operation is stored in the RAM of the control portion 3.

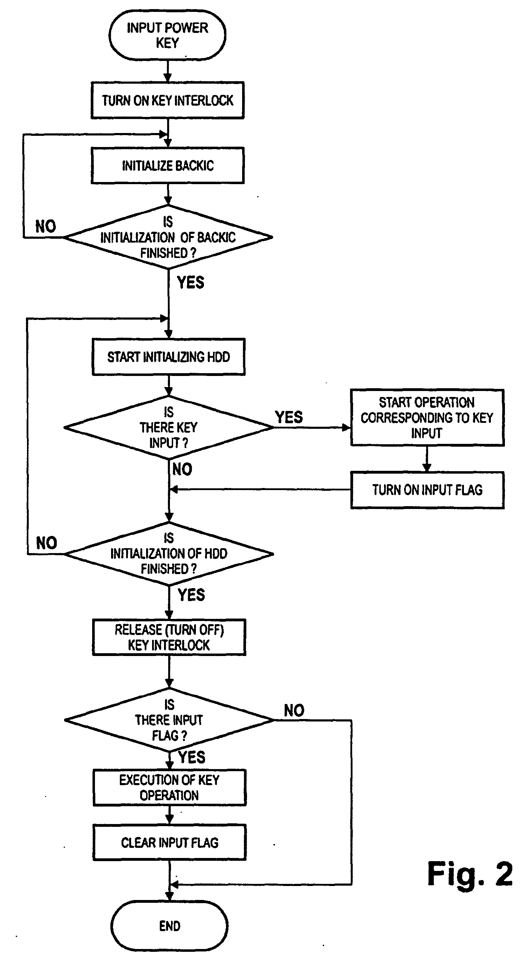

Operations during the initialization processing will next be described with reference to Fig. 2. When the power of the apparatus is turned on to start the apparatus, the control portion 3 performs the interlock first and then initializes the control target devices 2 connected to the control portion 3. When the initialization of the control target devices 2 is finished, the sub-control portion 5 initializes the control target devices 4 connected to the sub-control portion 5 in response to a command from the control portion 3. when the initialization of all of the control target devices 2 and 4 is finished, command communication, can be held between the control target devices 2 and the control portion 3 and that between the control target devices 4 and the sub-control portion 5. As a result, a display portion such as a television, which has displayed a specific image plane such as a blue image plane during the initialization, can display the picture received by the tuner. At this moment, however, the operation command from the operation portion 6 cannot be communicated yet.

Upon finishing the initialization of the control target devices 4, the sub-control portion 5 starts initializing the hard disk 1. The control portion 3 transmits the initialization end verification command to the sub-control portion 5 at intervals of, for example, 500 milliseconds. The sub-control portion 5 which receives this command checks whether the initialization of the hard disk 1 is finished, and transmits a response command to the control portion 3. If the response command indicates that "the hard disk is being initialized", . the control portion 3 which receives this response command transmits an initialization end verification command again after passage of certain time. The control portion 3 then displays the state in which the hard disk 1 is being initialised on the display portion to thereby notify the user of the progress status of the initialization.

When the initialization of the hard disk 1 is finished, the sub-control portion 5 transmits a response command which indicates that "the initialization of the hard disk is finished" to the control portion 2. The control portion 3 which receives this response command recognizer that the initialization of the hard disk 1 is finished, and releases the interlock. As a result, the initialization processing is finished and an operation corresponding to the operation input by the key operation is started.

During the time since the end of the initialization of the control target devices 2 and 4 until the end of the entire initialization processing, the control portion 3 monitors the input of the operation portion 6. If an operation command is transmitted from the operation portion 6 by user's operation, the control portion 3 stores the operation command in the RAM and turns on an input flag. After releasing the interlock, the control portion 3 drives the control target devices 2 and 4 or the sub-control portion 5 and clears the input flag so as to execute the operation corresponding to the stored operation command.

As can be seen, by monitoring the initialization of the hard disk 1, it is possible to grasp the processing status and promptly determine the point at which the initialization of the hard disk 1 is finished. If the area used by the hard disk 1 is small, the initialization is finished at earlier time. By recognizing the end of the initialization, it is unnecessary to continue the initialization processing for the predetermined time having the fixed length as seen in the conventional art to thereby make it possible to release the interlock at earlier time. It is, therefore, possible to reduce the time for which the apparatus is inoperable for the user and improve operativity of the apparatus.

The recording and reproduction apparatus in this embodiment is the composite apparatus of the hard disk 1 and the video recorder. Alternatively, the recording and reproduction apparatus may consist of only the hard disk 1. In this case, the apparatus does not include the sub-portion 5 and the control portion 3 includes initialization means for executing the initialization of the control target devices 2 and the hard disk 1 when the apparatus is started, lock means for nullifying the operation input from the operation portion during the initialization, verification means for verifying the progress status of the initialization of the hard disk 1, unlock means for accepting the operation when the end of the' initialization is verified, storage means for storing the operation input from the operation portion 6 during the initialization processing, and execution means for executing an operation corresponding to the stored operation after starting accepting the operation. The operations during the initialisation processing are the same as those shown in Fig. 2.

Needless to say, the present invention is not limited to this embodiment and various changes and modifications can be made to the embodiment within the scope of the present invention. As the recording medium, randomly accessible disks such as a DVD, a CD, and a semiconductor memory in addition to the hard disk can be employed. The recording and reproduction apparatus may include a plurality of types of recording mediums. Further, the progress status of the initialization may be monitored not regularly but constantly.

While the storage means stores only one operation, the storage means may sequentially store a plurality of operations. By doing so, it is possible to effectively utilize the latency time before the initialization processing is finished.

As is obvious from the above description, the present invention can finish the initialization according to the utilization amount of the recording medium by monitoring the progress status of the initialization. Therefore, the time required for the initialization can be reduced and rise time required when the apparatus is started can be shortened, as well. Accordingly, it is possible to eliminate the unnecessary latency time before the predetermined time passes which latency time occurs although actual initialization is finished, to enable the operation at earlier time, and to avoid causing user any inconvenience.

## Claims

1. A recording and reproduction apparatus comprising:
a recording medium which records data; and
a control portion which processes the data based on an operation input from an operation portion, wherein
the control portion comprises:
initialization means for executing initialization of the recording medium when the apparatus is started;
monitoring means for monitoring a progress status of the initialisation;
lock means for nullifying the operation input from the operation portion during the initialization; and
unlock means for accepting the operation when an end of the initialization is detected.

2. A recording and reproduction apparatus comprising:
a recording medium which records data;
a sub-control portion which drives and controls the recording medium; and
a control portion which controls the sub-control portion based on an operation input from an operation portion, and which processes the data, wherein
the sub-control portion comprises:
initialization means for executing initialization of the recording medium when the apparatus is started; and
detection means for detecting a praqress status of the initialization, and
the control portion comprises;
lock means for nullifying the operation input from the operation portion during the initialization;
verification means for verifying with the sub-control portion the progress status of the initialization; and
unlock means for accepting the operation when an end of the initialization is verified by a response from the sub-control portion.

3. The recording and reproduction apparatus according to claim 1 or 2, wherein
the control portion comprises storage means for storing the operation input from the operation portion during the initialization, and executes an operation corresponding to the stored operation after starting accepting the operation.
